# EUROPEAN PATENT SPECIFICATION

(11) **EP 3 653 375 B1**
(45) Date of publication and mention of the grant of the patent: **29.09.2021**
(21) Application number: 18206492.3
(22) Date of filing: 15.11.2018
(51) Int. Cl.: B32B 7/02, B32B 7/12, B32B 9/00, B32B 9/04, B32B 15/20, B32B 3/08, B32B 3/18, E04C 2/284

(54) **A METHOD OF PRODUCING AN INSULATION BOARD FOR A SANDWICH PANEL, AN INSULATION BOARD AND A METHOD FOR PRODUCING A SANDWICH PANEL**
VERFAHREN ZUR HERSTELLUNG EINER ISOLIERPLATTE FÜR EINE SANDWICHPLATTE, DÄMMPLATTE UND VERFAHREN ZUR HERSTELLUNG EINER SANDWICHPLATTE
PROCÉDÉ DE PRODUCTION D'UN PANNEAU ISOLANT POUR UN PANNEAU SANDWICH, PANNEAU ISOLANT ET PROCÉDÉ POUR PRODUIRE UN PANNEAU SANDWICH

(43) Date of publication of application: 20.05.2020
(73) Proprietor: Rockwool International A/S, 2640 Hedehusene (DK)
(72) Inventor: Rahbek, Jens Eg, 2640 Hedehusene (DK); Lindby, Steen, 2640 Hedehusene (DK)
(74) Representative: Høiberg P/S

(56) References cited:
- EP-A1- 3 075 918
- GB-A- 1 397 299
- US-A- 5 776 580
- US-A1- 2017 321 359

## Description

The present invention relates to a method of producing an insulation board for a sandwich panel, an insulation board for a sandwich panel and a method for producing a sandwich panel.

Often sandwich panels are made of a core comprising adjacent mineral wool fibre lamellae, which are sandwiched between two metal sheets. Such sandwich panels are employed in the building industry as e.g. facade or roof panels and providing the building with fireproof thermal insulation properties. In order to reinforce the sandwich core reinforcement elements may be provided between the lamellae whereby the compression strength, shear strength, bending strength and delamination strength are increased. An example of such sandwich panel is known from WO 2005/124048.

In WO 2016/083368 there is disclosed a sandwich panel with a core of mineral wool fibre lamellae having a relative low density and with high density stringers in between said lamellae. This sandwich panel is produced by cutting a dual density mineral fibre product into the lamellae and rotating the lamellae before re-joining them to form the core layer in the sandwich panel. Hereby, the thermal insulation performance of the sandwich panel is improved in a cost-efficient manner due to the possibility of reducing the average density of the core material.

From WO 2017/102481 an insulation product is known where a board of porous insulation material, such as stone wool, is wrapped in a gas-impermeable foil and sealed so that entrapped gas at sub-atmospheric pressure is inside the foil. The entrapped gas can be carbon dioxide, argon or the like, whereby a lowering of the thermal conductivity properties of the insulation board is achieved. However, this improved thermal insulation property is lost if the gas-impermeable sealing foil is punctured and atmospheric gas enters the porous insulation board.

The general technical background of the invention also includes EP3075918A1.

It is a first object of the present invention to produce an insulation board, which can be used in a conventional sandwich panel production process in order to produce a sandwich panel having improved thermal insulation properties.

This object is achieved by providing a method of producing an insulation board for use in a sandwich panel production process, said method comprising:
- providing a plurality of elongated insulation elements, each comprising a board of porous insulation material wrapped in a gas-impermeable foil and having a top surface and a bottom surface and a generally rectangular cross-sectional shape;
- arranging said elongated insulation elements adjacent each other on a first mineral wool fibre board at a predetermined distance from each other, the bottom surfaces of said elongated insulation elements being fixed to the first mineral wool fibre board; and
- arranging and fixing a second mineral wool fibre board on the top surfaces of said elongated insulation elements.

Accordingly, by performing this method there is provided an insulation board for producing a sandwich panel core which comprises a plurality of elongated insulation elements, each comprising a board of porous insulation material wrapped in a gas-impermeable foil and having a top surface and a bottom surface and a generally rectangular cross-sectional shape; said elongated insulation elements being arranged adjacent each other at a predetermined distance from each other, a first mineral fibre board being fixed to the bottom surfaces of said plurality of elongated insulation elements and a second mineral wool fibre board fixed to the top surface of said plurality of elongated insulation elements.

Hereby, there is provided an insulation board, which can be used in a conventional sandwich panel production process in order to produce a sandwich panel with improved thermal insulation properties. The enhanced thermal insulation properties of a board of porous insulation material, such as stone wool, wrapped in a gas-impermeable foil are by the invention found advantageous to utilise in a sandwich panel. The foil is wrapped but not adhesively attached to the insulation material so according to the invention the provision of the first and second mineral wool fibre board will provide the necessary compression strength as well as shear strength, bending strength and delamination strength to the sandwich panel as the first and second boards end as stringers in the resulting sandwich panel.

Accordingly, another aspect of the invention is the provision of a method of producing a sandwich panel, said method comprising the steps of:
- providing an insulation board as defined above; whereby the method of producing a sandwich panel comprises the steps of:
- cutting said insulation board into a plurality of lamellae by cutting through the space created by the predetermined distance between the elongated insulation elements of the insulation board,
- rotating said lamellae 90 degrees,
- re-assembling the rotated lamellae to form a sandwich core panel, wherein the first and second mineral wool fibre boards are arranged adjacent each other, and then
- applying a first cover sheet on one side of the sandwich core panel and applying a second cover sheet on an opposite side of the sandwich core panel.

In some preferred embodiments, the elongated insulation elements are arranged in rows comprising a plurality of elongated insulation elements abutting each other end-to-end and where the predetermined distance is between said rows. The elongated insulation elements at the end regions of the resulting sandwich panel may have to be cut in order to achieve the desired dimensions of the sandwich panel. However, since the insulation elements are wrapped in gas-impermeable foil and often filled with a highly insulating gas, any cut will puncture this foil wrapping and thereby the insulation properties of the particular insulation element are compromised. However, by arranging rows with several elements in each row in the insulation board, the ratio of "punctured" elements is reduced.

In the method according to the invention, "fingers" are preferably temporarily arranged between the rows of elongated insulation elements until the elongated insulation elements have been fixed to at least one of the first and second mineral wool fibre boards, whereafter the fingers are removed. Hereby the predetermined distance between the elongated insulation elements creates a space which is void. This results in less material used and thereby a more cost-effective and lighter sandwich panel.

In an alternative embodiment, spacer elements may be provided between the elongated insulation elements, when the elongated insulation elements are arranged on the first mineral wool fibre board, said spacer elements having a thickness corresponding to the predetermined distance between the elongated insulation elements.

Preferably said spacer elements are made of mineral wool fibre, preferably with a density of 40-100 kg/m³, preferably 50-80 kg/m³. Accordingly, the spacer elements can preferably be provided with a lower density to reduce the weight of the final sandwich panel since the spacer elements in the final product do not need to contribute to structural strength of the sandwich panel.

In some preferred embodiments, the porous insulation material of the elongated insulation elements is a low density mineral wool fibre product, such as a product having a density of 10-100 kg/m³.

In some preferred embodiments, the ambient air inside the gas-impermeable foil is replaced by an insulating gas, such as argon or CO₂.

In some preferred embodiments, the first and second mineral wool fibre boards are made of mineral wool fibres with a density of 100-250 kg/m³, preferably 150-200 kg/m³, more preferably approx. 170 kg/m³.

In a sandwich panel and the method of producing the panel according to the invention, the first and second cover sheets are preferably glued to edges of at least some of the first and second mineral wool fibre boards.

In a sandwich panel according to the invention, the first and second cover sheets may be textured or plain smooth sheets, preferably made of metal, such as steel.

In the following the invention is described in further detail with reference to the accompanying drawings, in which:
- Fig. 1: is a schematic perspective illustration of an end section of an insulation board for use in a sandwich panel according to a first embodiment of the invention;
- Fig. 2: is a schematic end view of the insulation board ready for cutting into lamellae;
- Fig. 3 a) and b): show the rotation of lamellae with elongated insulation elements;
- Fig. 4: is a schematic end exploded view of a sandwich panel according to said first embodiment;
- Fig. 5: is a perspective illustration of the end section of the resulting sandwich panel according to said first embodiment of the invention;
- Fig. 6: is a schematic perspective illustration of an end section of an insulation board for use in a sandwich panel according to a second embodiment of the invention;
- Fig. 7: is a schematic end view of the insulation board ready for cutting into lamellae;
- Fig. 8 a) and b): show the rotation of lamellae with elongated insulation elements;
- Fig. 9: is a schematic end exploded view of a sandwich panel according to said second embodiment; and
- Fig. 10: is a perspective view of the end section of the resulting sandwich panel according to said second embodiment of the invention.

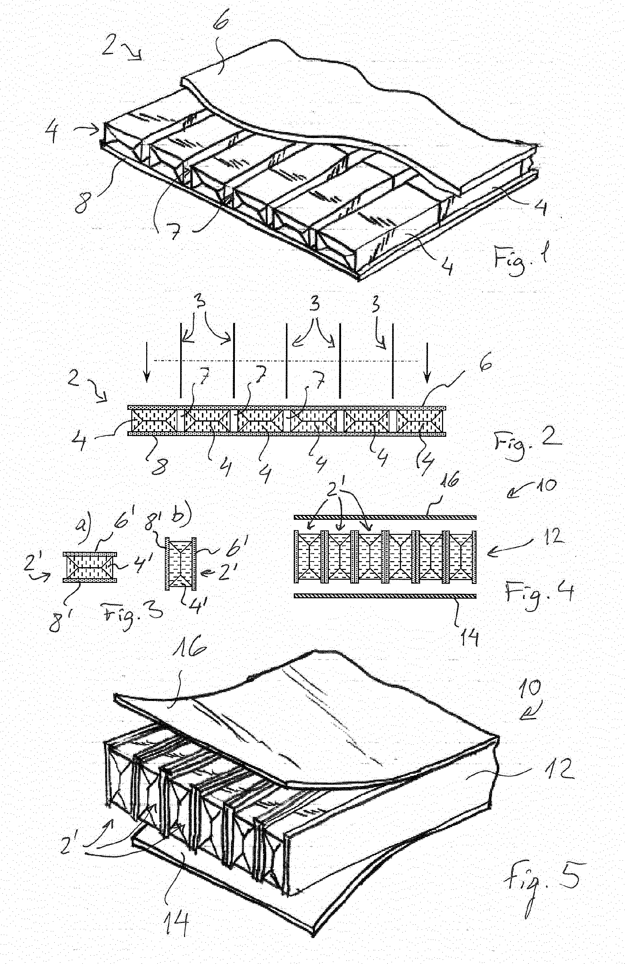

With reference to fig. 1-5 a first embodiment of the invention is shown. In fig. 1 there is shown an insulation board 2 for use in a sandwich panel production process to produce a sandwich panel 10, as shown in fig. 5. The insulation board 2 comprises a plurality of elongated insulation elements 4. The elements 4 are made up of porous insulation material wrapped in a gas-impermeable foil, and where the insulation elements 4 have a generally rectangular cross-sectional shape. The insulation elements 4 are arranged in rows adjacent each other on a first mineral wool fibre board 8 at a predetermined distance from each other and a second mineral wool fibre board 6. The elongated insulation elements 4 are fixed to the first and second mineral wool fibre boards 6, 8, for example by gluing.

As shown in fig. 1, the elongated insulation elements 4 are preferably arranged in rows comprising a plurality of elongated insulation elements 4 abutting each other end-to-end and where the predetermined distance is between said rows. In order to provide the insulation elements 4 in the predetermined distance, distance members or "fingers" (not shown) on production tools may preferably be provided to ensure the rows are provided with sufficient accuracy in the insulation board 2. Accordingly, distance members, such as fingers, are temporarily arranged between the rows of elongated insulation elements 4 until the elongated insulation elements 4 have been fixed to at least one of the first and second mineral wool fibre boards 6, 8. These fingers are afterwards removed, when the elongated insulation elements 4 have been fixed to either of or both of the first and second mineral fibre boards 6, 8 with a space 7 between each row.

As shown in fig. 2, when the insulation board 2 is assembled, the insulation board 2 is cut by cutting tools 3 into a plurality of lamellae 2' (see also figs. 3 and 4) by cutting through the space 7 created by the predetermined distance between the elongated insulation elements 4 of the insulation board 2. The cutting tools 3 are arranged with equidistant mutual distances and the rows, and thereby the position of the spaces 7 between the elongated insulation elements 4, are arranged such that the cutting tools 3 cut the lamellae 2' by cutting through the spaces 7 leaving the insulation elements 4 intact and thus not perforated.

Each of the lamellae 2' are rotated 90 degrees as shown in fig. 3 a) and b) and then the rotated lamellae 2' are re-assembled as shown in fig. 4 to form a sandwich core panel 12. To form a sandwich panel 10, a first cover sheet 14 on one side of the sandwich core panel 12 is applied to one side of the sandwich core panel 12 and a second cover sheet 16 is applied on an opposite side of the sandwich core panel 12. The first and second cover sheets 14, 16 are attached to the sandwich core panel 12, preferably by being glued to the cut ends of the first and second mineral wool boards 6, 8 of each lamellae2'. These first and second cover sheets 14, 16 are preferably steel plates and may be textured or plain smooth sheets. Often the cover sheets 14, 16 have a thickness of 0.5 to 1 mm, but they may be thicker.

The porous insulation material of the elongated insulation elements 4 is preferably a low density mineral wool fibre product, such as a product having a density of 10-100 kg/m³. As mentioned above, the insulation material is wrapped in a gas-impermeable foil to form the elongated insulation element 4. Inside the foil ambient air is preferably replaced by an insulating gas, such as argon or CO₂, to increase the insulation properties. In the preferred embodiments, the foil is not adhesively attached to the insulation material, but tightly fitted around the insulation material and provided with sub-pressure inside the foil. The elongated insulation elements 4 may also be so-called vacuum insulating panels (VIP).

The first and second mineral wool fibre boards 6, 8 are made of mineral wool fibres with a density of 100-250 kg/m³, preferably 150-200 kg/m³, more preferably approx. 170 kg/m³. This density is a higher density than that of the insulation material of the insulation elements 4. This means that when the lamellae are rotated, the mineral fibre boards 6, 8 act as stingers and provide increased compression strength as well as increased shear strength, bending strength and delamination strength of the final sandwich panel 10.

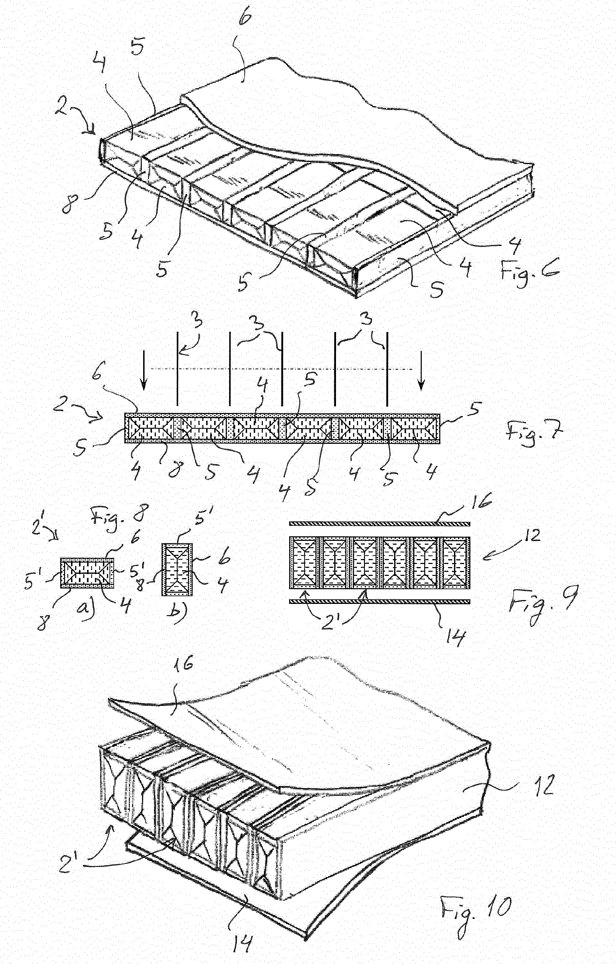

In figs. 6-10 a second embodiment of the invention is shown, wherein spacer elements 5 are provided between the rows of elongated insulation elements 4. Accordingly, the elongated insulation elements 4 are arranged on the first mineral wool fibre board 8 with the spacer elements 5 in between so that due to the thickness of the spacer elements 5, which is corresponding to the predetermined distance between the elongated insulation elements 4 the insulation core panel 2, the insulation core panel 2 is provided such that the cutting tools 3 is cutting the lamellae 2' by cutting through the spacer elements 5 leaving the insulation elements 4 intact and thus not perforated (as shown in fig. 7).

The spacer elements 5 are preferably made of mineral wool fibre, preferably with a density of 40-100 kg/m³, preferably 50-80 kg/m³. With the first and second mineral wool fibre boards 6, 8 being made of mineral wool fibres with a density of 100-250 kg/m³, preferably 150-200 kg/m³, more preferably approx. 170 kg/m³, and which is a higher density than that of the insulation material of the insulation elements 4, the spacer elements 5 can be provided with a lower density as the spacer elements 5 in the final product do not need to contribute to structural strength of the sandwich panel.

Like in the first embodiment, each of the lamellae 2' are rotated 90 degrees as shown in fig. 8 a) and b) and then the rotated lamellae 2' are re-assembled as shown in fig. 9 to form a sandwich core panel 12. To form a sandwich panel 10, a first cover sheet 14 on one side of the sandwich core panel 12 is applied to one side of the sandwich core panel 12 and a second cover sheet 16 is applied on an opposite side of the sandwich core panel 12. The first and second cover sheets 14, 16 are attached to the sandwich core panel 12, preferably by being glued to the cut ends of the first and second mineral wool boards 6, 8 of each lamellae2'. These first and second cover sheets 14, 16 are preferably steel plates and may be textured or plain smooth sheets. Often the cover sheets 14, 16 have a thickness of 0.5 to 1 mm, but they may be thicker.

The porous insulation material of the elongated insulation elements 4 is preferably a low density mineral wool fibre product, such as a product having a density of 10-100 kg/m³. As mentioned above, the insulation material is wrapped in a gas-impermeable foil to form the elongated insulation element 4. Inside the foil ambient air is preferably replaced by an insulating gas, such as argon or CO₂, to increase the insulation properties. In the preferred embodiments, the foil is not adhesively attached to the insulation material but tightly fitted around the insulation material and provided with sub-pressure inside the foil. The elongated insulation elements 4 may also be so-called vacuum insulating panels (VIP).

Like in the first embodiment, also in the second embodiment as shown in fig. 10, the first and second mineral wool fibre boards 6, 8 are made of mineral wool fibres with a density of 100-250 kg/m³, preferably 150-200 kg/m³, more preferably approx. 170 kg/m³. This density is a higher density than that of the insulation material of the insulation elements 4. This means that when the lamellae are rotated, the mineral fibre boards 6, 8 act as stingers and provide increased compression strength as well as increased shear strength, bending strength and delamination strength of the final sandwich panel 10.

In any preferred embodiment the overall dimensions of the insulation board 2 may be approximately 2000x1000x100 mm, since this is the size of mineral wool boards used in conventional sandwich production processes. Each of the elongated insulation elements 4 may have a length of e.g. 500 mm, a width of 150 to 350 mm (corresponding to the thickness of the final sandwich panel) and a thickness of 60 to 80 mm. The thickness of the first and second mineral wool boards 6, 8 may be 10 to 20 mm. The distance between the elongated insulation elements may be 10 to 20 mm, such that there is sufficient space to cut between the insulation elements 4. Other dimensions may of course be applied.

Above the present invention is described with reference to some currently preferred embodiments. However, by the invention it is realised that variants and other embodiments may be provided without departing from the scope of the invention as defined in the accompanying claims.

## Claims

1. A method of producing an insulation board for use in a sandwich panel production process, said method comprising:
- providing a plurality of elongated insulation elements, each comprising a board of porous insulation material wrapped in a gas-impermeable foil and having a top surface and a bottom surface and a generally rectangular cross-sectional shape;
- arranging said elongated insulation elements adjacent each other on a first mineral wool fibre board at a predetermined distance from each other, the bottom surfaces of said elongated insulation elements being fixed to the first mineral wool fibre board; and
- arranging and fixing a second mineral wool fibre board on the top surfaces of said elongated insulation elements.

2. A method according to claim 1, whereby the elongated insulation elements are arranged in rows comprising a plurality of elongated insulation elements abutting each other end-to-end and where the predetermined distance is between said rows.

3. A method according to claim 1 or 2, whereby fingers are temporarily arranged between the rows of elongated insulation elements until the elongated insulation elements have been fixed to at least one of the first and second mineral wool fibre boards, whereafter the fingers are removed.

4. A method according to any one of the preceding claims, whereby spacer elements are provided between the elongated insulation elements, when the elongated insulation elements are arranged on the first mineral wool fibre board, said spacer elements having a thickness corresponding to the predetermined distance between the elongated insulation elements.

5. A method according to claim 4, whereby said spacer elements are made of mineral wool fibre, preferably with a density of 40-100 kg/m³, preferably 50-80 kg/m³.

6. A method according to any one of the preceding claims, whereby the porous insulation material of the elongated insulation elements is a low density mineral wool fibre product, such as a product having a density of 10-100 kg/m³.

7. A method according to any one of the preceding claims, whereby ambient air inside the gas-impermeable foil is replaced by an insulating gas, such as argon or CO₂.

8. A method according to any one of the preceding claims, whereby the first and second mineral wool fibre boards are made of mineral wool fibres with a density of 100-250 kg/m³, preferably 150-200 kg/m³, more preferably approx. 170 kg/m³.

9. An insulation board for use in a sandwich panel production process, said board comprising
a plurality of elongated insulation elements, each comprising a board of porous insulation material wrapped in a gas-impermeable foil and having a top surface and a bottom surface and a generally rectangular cross-sectional shape;
said elongated insulation elements being arranged adjacent each other at a predetermined distance from each other,
a first mineral fibre board being fixed to the bottom surfaces of said plurality of elongated insulation elements and a second mineral wool fibre board fixed to the top surface of said plurality of elongated insulation elements.

10. An insulation board according to claim 9, wherein the elongated insulation elements are arranged in rows comprising a plurality of elongated insulation elements abutting each other end-to-end and where the predetermined distance is between said rows.

11. An insulation board according to claim 9 or 10, wherein a plurality of spacer elements are provided between the elongated insulation elements, said spacer elements having a thickness corresponding to the predetermined distance between the elongated insulation elements.

12. An insulation board according to claim 11, wherein the spacer elements are made of mineral wool fibres with a density of 40-100 kg/m³, preferably 50-80 kg/m³.

13. An insulation board according to claim 9 or 10, wherein the predetermined distance between the elongated insulation elements creates a space which is void.

14. An insulation board according to any one of claims 9 to 13, wherein the porous insulation material of the elongated insulation elements is a low density mineral wool fibre product, such as a product having a density of 10-100 kg/ m³.

15. An insulation board according to any one of claims 9 to 14, wherein ambient air inside the gas-impermeable foil is replaced by an insulating gas, such as argon or CO₂.

16. An insulation board according to any one of claims 9 to 15, wherein the first and second mineral wool fibre boards are made of mineral wool fibres with a density of 100-250 kg/m³, preferably 150-200 kg/m³, more preferably approx. 170 kg/m³.

17. A method of producing a sandwich panel, said method comprising the steps of:
- providing an insulation board according to any one of the preceding claims 9 to 16; whereby the method of producing a sandwich panel comprises the steps of:
- cutting said insulation board into a plurality of lamellae by cutting through the space created by the predetermined distance between the elongated insulation elements of the insulation board,
- rotating said lamellae 90 degrees,
- re-assembling the rotated lamellae to form a sandwich core panel, wherein the first and second mineral wool fibre boards are arranged adjacent each other, and then
- applying a first cover sheet on one side of the sandwich core panel and applying a second cover sheet on an opposite side of the sandwich core panel.

18. A method according to claim 17, wherein the first and second cover sheets are glued to edges of at least some of the first and second mineral wool fibre boards.

19. A method according to claim 17 or 18, whereby said first and second cover sheets are textured or plain smooth sheets, preferably made of metal, such as steel.

## Patentansprüche

1. Verfahren zum Herstellen einer Isolierplatte zur Verwendung in einem Sandwichplattenherstellungsprozess, wobei das Verfahren Folgendes umfasst:
- Bereitstellen einer Vielzahl von länglichen Isolierelementen, wobei jedes eine Platte aus porösem Isoliermaterial, das in einer gasundurchlässigen Folie eingewickelt ist, umfasst und eine Oberfläche und eine Unterfläche und eine im Allgemeinen rechteckige Querschnittsform aufweist;
- Anordnen der länglichen Isolierelemente benachbart zueinander auf einer ersten Mineralwollfaserplatte mit einem vorbestimmten Abstand voneinander, wobei die Unterflächen der länglichen Isolierelemente an der ersten Mineralwollfaserplatte befestigt sind; und
- Anordnen und Befestigen einer zweiten Mineralwollfaserplatte an den Oberflächen der länglichen Isolierelemente.

2. Verfahren nach Anspruch 1, bei dem die länglichen Isolierelemente in Reihen angeordnet sind, die eine Vielzahl von länglichen Isolierelementen, die durchgehend aneinander anliegen, umfassen und wobei der vorbestimmte Abstand zwischen den Reihen vorhanden ist.

3. Verfahren nach Anspruch 1 oder 2, bei dem Zapfen zeitweise zwischen den Reihen länglicher Isolierelemente angeordnet sind, bis die länglichen Isolierelemente an mindestens einer von der ersten und zweiten Mineralwollfaserplatte befestigt sind, wobei die Zapfen danach entfernt werden.

4. Verfahren nach einem der vorstehenden Ansprüche, bei dem Abstandshalterelemente zwischen den länglichen Isolierelementen bereitgestellt sind, wenn die länglichen Isolierelemente auf der ersten Mineralwollfaserplatte angeordnet sind, wobei die Abstandshalterelemente eine Dicke aufweisen, die dem vorbestimmten Abstand zwischen den länglichen Isolierelementen entspricht.

5. Verfahren nach Anspruch 4, bei dem die Abstandshalterelemente aus Mineralwollfaser gefertigt sind, vorzugsweise mit einer Dichte von 40-100 kg/m³, vorzugsweise 50-80 kg/m³.

6. Verfahren nach einem der vorstehenden Ansprüche, bei dem das poröse Isoliermaterial der länglichen Isolierelemente ein Mineralwollfaserprodukt mit geringer Dichte ist, wie etwa ein Produkt mit einer Dichte von 10-100 kg/m³.

7. Verfahren nach einem der vorstehenden Ansprüche, bei dem Umgebungsluft innerhalb der gasundurchlässigen Folie durch ein Isoliergas, wie etwa Argon oder CO₂, ersetzt ist.

8. Verfahren nach einem der vorstehenden Ansprüche, bei dem die erste und zweite Mineralwollfaserplatte aus Mineralwollfasern mit einer Dichte von 100-250 kg/m³, vorzugsweise 150-200 kg/m³, mehr bevorzugt ungefähr 170 kg/m³ gefertigt sind.

9. Isolierplatte zur Verwendung in einem Sandwichplattenherstellungsprozess, wobei die Platte Folgendes umfasst:
eine Vielzahl von länglichen Isolierelementen, wobei jedes eine Platte aus porösem Isoliermaterial, das in einer gasundurchlässigen Folie eingewickelt ist, umfasst und eine Oberfläche und eine Unterfläche und eine im Allgemeinen rechteckige Querschnittsform aufweist;
wobei die länglichen Isolierelemente benachbart zueinander mit einem vorbestimmten Abstand voneinander angeordnet sind,
wobei eine erste Mineralfaserplatte an den Unterflächen der Vielzahl von länglichen Isolierelementen befestigt ist und eine zweite Mineralwollfaserplatte an der Oberfläche der Vielzahl von länglichen Isolierelementen befestigt ist.

10. Isolierplatte nach Anspruch 9, wobei die länglichen Isolierelemente in Reihen angeordnet sind, die eine Vielzahl von länglichen Isolierelementen, die durchgehend aneinander anliegen, umfassen und wobei der vorbestimmte Abstand zwischen den Reihen vorhanden ist.

11. Isolierplatte nach Anspruch 9 oder 10, wobei eine Vielzahl von Abstandshalterelementen zwischen den länglichen Isolierelementen bereitgestellt ist, wobei die Abstandshalterelemente eine Dicke aufweisen, die dem vorbestimmten Abstand zwischen den länglichen Isolierelementen entspricht.

12. Isolierplatte nach Anspruch 11, wobei die Abstandshalterelemente aus Mineralwollfasern mit einer Dichte von 40-100 kg/m³, vorzugsweise 50-80 kg/m³, gefertigt sind.

13. Isolierplatte nach Anspruch 9 oder 10, wobei der vorbestimmte Abstand zwischen den länglichen Isolierelementen einen Raum erzeugt, der leer ist.

14. Isolierplatte nach einem der Ansprüche 9 bis 13, wobei das poröse Isoliermaterial der länglichen Isolierelemente ein Mineralwollfaserprodukt mit geringer Dichte ist, wie etwa ein Produkt mit einer Dichte von 10-100 kg/m³.

15. Isolierplatte nach einem der Ansprüche 9 bis 14, wobei Umgebungsluft innerhalb der gasundurchlässigen Folie durch ein Isoliergas, wie etwa Argon oder CO₂, ersetzt ist.

16. Isolierplatte nach einem der Ansprüche 9 bis 15, wobei die erste und zweite Mineralwollfaserplatte aus Mineralwollfasern mit einer Dichte von 100-250 kg/m³, vorzugsweise 150-200 kg/m³, mehr bevorzugt ungefähr 170 kg/m³ gefertigt sind.

17. Verfahren zum Herstellen einer Sandwichplatte, wobei das Verfahren die folgenden Schritte umfasst:
- Bereitstellen einer Isolierplatte nach einem der vorstehenden Ansprüche 9 bis 16; wobei das Verfahren zum Herstellen einer Sandwichplatte die folgenden Schritte umfasst:
- Schneiden der Isolierplatte in eine Vielzahl von Lamellen durch Schneiden durch den Raum, der durch den vorbestimmten Abstand zwischen den länglichen Isolierelementen der Isolierplatte erzeugt wurde,
- Drehen der Lamellen um 90 Grad,
- erneutes Zusammenbauen der gedrehten Lamellen, um eine Sandwichkernplatte zu bilden, wobei die erste und zweite Mineralwollfaserplatte benachbart zueinander angeordnet sind, und dann
- Aufbringen einer ersten Deckschicht auf einer Seite der Sandwichkernplatte und Aufbringen einer zweiten Deckschicht auf einer gegenüberliegenden Seite der Sandwichkernplatte.

18. Verfahren nach Anspruch 17, wobei die erste und zweite Deckschicht an Kanten mindestens einiger der ersten und zweiten Mineralwollfaserplatten geklebt werden.

19. Verfahren nach Anspruch 17 oder 18, wobei die erste und zweite Deckschicht strukturierte oder glatte gleichmäßige Schichten sind, die vorzugsweise aus Metall, wie etwa Stahl, gefertigt sind.

## Revendications

1. Procédé de production d'un panneau isolant destiné à être utilisé dans un processus de production de panneau sandwich, ledit procédé comprenant :
- la fourniture d'une pluralité d'éléments isolants allongés, chacun comprenant un panneau de matériau isolant poreux enveloppé dans une feuille imperméable aux gaz et ayant une surface supérieure et une surface inférieure et une forme de section transversale généralement rectangulaire ;
- l'agencement desdits éléments isolants allongés adjacents les uns aux autres sur un premier panneau de fibre de laine minérale à une distance prédéterminée les uns des autres, les surfaces inférieures desdits éléments isolants allongés étant fixées au premier panneau de fibre de laine minérale ; et
- l'agencement et la fixation d'un second panneau de fibre de laine minérale sur les surfaces supérieures desdits éléments isolants allongés.

2. Procédé selon la revendication 1, selon lequel les éléments isolants allongés sont agencés en rangées comprenant une pluralité d'éléments isolants allongés venant en butée les uns contre les autres bout à bout et où la distance prédéterminée est entre lesdites rangées.

3. Procédé selon la revendication 1 ou 2, selon lequel des doigts sont temporairement agencés entre les rangées d'éléments isolants allongés jusqu'à ce que les éléments isolants allongés soient fixés à au moins un des premier et second panneaux de fibre de laine minérale, après quoi les doigts sont retirés.

4. Procédé selon l'une quelconque des revendications précédentes, selon lequel des éléments d'espacement sont prévus entre les éléments isolants allongés, lorsque les éléments isolants allongés sont agencés sur le premier panneau de fibre de laine minérale, lesdits éléments d'espacement ayant une épaisseur correspondant à la distance prédéterminée entre les éléments isolants allongés.

5. Procédé selon la revendication 4, selon lequel lesdits éléments d'espacement sont en fibre de laine minérale, de préférence d'une densité de 40 à 100 kg/m³, de préférence de 50 à 80 kg/m³.

6. Procédé selon l'une quelconque des revendications précédentes, selon lequel le matériau isolant poreux des éléments isolants allongés est un produit en fibre de laine minérale à faible densité, tel qu'un produit ayant une densité de 10 à 100 kg/m³.

7. Procédé selon l'une quelconque des revendications précédentes, selon lequel l'air ambiant à l'intérieur de la feuille imperméable aux gaz est remplacé par un gaz isolant, tel que l'argon ou le CO₂.

8. Procédé selon l'une quelconque des revendications précédentes, selon lequel les premier et second panneaux de fibre de laine minérale sont en fibres de laine minérale d'une densité de 100 à 250 kg/m³, de préférence de 150 à 200 kg/m³, de préférence encore d'environ 170 kg/m³.

9. Panneau isolant destiné à être utilisé dans un processus de production de panneau sandwich, ledit panneau comprenant une pluralité d'éléments isolants allongés, comprenant chacun un panneau de matériau isolant poreux enveloppé dans une feuille imperméable aux gaz et ayant une surface supérieure et une surface inférieure et une forme de section transversale généralement rectangulaire ;
lesdits éléments isolants allongés étant agencés adjacents les uns aux autres à une distance prédéterminée les uns des autres, un premier panneau de fibre minérale étant fixé aux surfaces inférieures de ladite pluralité d'éléments isolants allongés et un second panneau de fibre de laine minérale fixé à la surface supérieure de ladite pluralité d'éléments isolants allongés.

10. Panneau isolant selon la revendication 9, dans lequel les éléments isolants allongés sont agencés en rangées comprenant une pluralité d'éléments isolants allongés venant en butée les uns contre les autres bout à bout et où la distance prédéterminée est entre lesdites rangées.

11. Panneau isolant selon la revendication 9 ou 10, dans lequel une pluralité d'éléments d'espacement sont prévus entre les éléments isolants allongés, lesdits éléments d'espacement ayant une épaisseur correspondant à la distance prédéterminée entre les éléments isolants allongés.

12. Panneau isolant selon la revendication 11, dans lequel les éléments d'espacement sont en fibres de laine minérale d'une densité de 40 à 100 kg/m³, de préférence de 50 à 80 kg/m³.

13. Panneau isolant selon la revendication 9 ou 10, dans lequel la distance prédéterminée entre les éléments isolants allongés crée un espace qui est vide.

14. Panneau isolant selon l'une quelconque des revendications 9 à 13, dans lequel le matériau isolant poreux des éléments isolants allongés est un produit en fibre de laine minérale à faible densité, tel qu'un produit ayant une densité de 10 à 100 kg/m³.

15. Panneau isolant selon l'une quelconque des revendications 9 à 14, dans lequel l'air ambiant à l'intérieur de la feuille imperméable aux gaz est remplacé par un gaz isolant, tel que l'argon ou le CO₂.

16. Panneau isolant selon l'une quelconque des revendications 9 à 15, dans lequel les premier et second panneaux de fibre de laine minérale sont en fibres de laine minérale d'une densité de 100 à 250 kg/m³, de préférence de 150 à 200 kg/m³, de préférence encore d'environ 170 kg/m³.

17. Procédé de production d'un panneau sandwich, ledit procédé comprenant les étapes suivantes :
- la fourniture d'un panneau isolant selon l'une quelconque des revendications précédentes 9 à 16 ; selon lequel le procédé de production d'un panneau sandwich comprend les étapes suivantes :
- le découpage dudit panneau isolant en une pluralité de lamelles en découpant à travers l'espace créé par la distance prédéterminée entre les éléments isolants allongés du panneau isolant,
- la rotation desdites lamelles de 90 degrés,
- le réassemblage des lamelles tournées pour former un panneau à noyau sandwich, dans lequel les premier et second panneaux de fibre de laine minérale sont agencés adjacents les un aux autres, puis
- l'application d'une première tôle de couverture sur un côté du panneau à noyau sandwich et l'application d'une seconde tôle de couverture sur un côté opposé du panneau à noyau sandwich.

18. Procédé selon la revendication 17, dans lequel les première et seconde tôles de couverture sont collées aux bords d'au moins certains des premier et second panneaux de fibre de laine minérale.

19. Procédé selon la revendication 17 ou 18, selon lequel lesdites première et seconde tôles de couverture sont des tôles texturées ou lisses, de préférence en métal, tel que l'acier.
